# EUROPÄISCHE PATENTSCHRIFT

(11) **EP 2 188 563 B1**
(45) Veröffentlichungstag und Bekanntmachung des Hinweises auf die Patenterteilung: **17.07.2013**
(21) Anmeldenummer: 08787423.6
(22) Anmeldetag: 22.08.2008
(51) Int. Cl.: D06F 39/08, F16L 25/10, F16L 25/14, A47L 15/42

(54) **HYDRAULIK VERBINDUNGSTEIL EINES WASSERFÜHRENDEN HAUSHALTSGERÄTS**
HYDRAULIC CONNECTING ELEMENT OF A WATER-CONDUCTING DOMESTIC APPLIANCE
ÉLÉMENT DE RACCORDEMENT HYDRAULIQUE D'UN ÉQUIPEMENT MÉNAGER À CIRCULATION D'EAU

(30) Priorität: 31.08.2007 DE 102007041309
(43) Veröffentlichungstag der Anmeldung: 26.05.2010
(73) Patentinhaber: BSH Bosch und Siemens Hausgeräte GmbH, 81739 München (DE)
(72) Erfinder: BÜSING, Johannes, 86494 Emersacker (DE); ENDERLE, Werner, 89312 Günzburg (DE); GEISSLER, Peter, 89438 Holzheim (DE); KÜCÜK, Cengiz, 89428 Syrgenstein (DE); SANCHO, Pedro, E - 50012 Zaragoza (ES)
(86) Internationale Anmeldenummer: PCT/EP2008/061024
(87) Internationale Veröffentlichungsnummer: WO 2009/027340

(56) Entgegenhaltungen:
- DE-A- 273 737
- DE-A1- 1 802 090
- DE-A1- 3 310 226
- DE-A1- 19 758 249
- US-A1- 2008 168 769

## Beschreibung

Die Erfindung betrifft ein wasserführendes Haushaltsgerät nach dem Oberbegriff des Anspruchs 1.

Wasserführende Haushaltsgeräte weisen u.a. ein Verbindungsteil für eine druckdichte Verbindung von Hydraulikkomponenten auf, das im Wesentlichen aus einem elastischen Material besteht und bei dem an den Kontaktbereichen mit den zu verbindenden Hydraulikkomponenten Stützringe angeordnet sind, die eine druckdichte Verbindung gewährleisten. Bei den Hydraulikkomponenten kann es sich zum Beispiel um eine Anschlussbuchse einer Pumpe zur Verbindung mit einem Stutzen handeln. Das Verbindungsteil wird dabei auf eine der beiden Hydraulikkomponenten aufgesteckt oder kann mit dieser fest verbunden sein. Die zweite Hydraulikkomponente wird dann in das Verbindungsteil eingeschoben.

Ein derartiges Verbindungsteil zeigt zum Beispiel die Patentschrift DE -A- 197 58 249. Dabei handelt es sich um ein Verbindungsteil aus elastischem Material zwischen einem Pumpenanschluss und einem weiteren Anschluss zum Beispiel einem Auslaufstutzen eines Behälters. Der Auslaufstutzen umschließt das elastische Verbindungsteil. Es weist mindestens eine Faltung auf, um eine Übertragung von Schwingungen und Laufgeräuschen weitgehend zu vermeiden. Am anderen Ende umschließt das Verbindungsteil den eingepressten Pumpenanschluss. Die Verbindungen werden im Kontaktbereich durch Stützringe oder Schlauchschellen zusammengehalten. Für eine korrekte Montage des Verbindungsteils ist ein axiales Einschieben des Stutzens erforderlich. Das ist aus Platzgründen oft nicht möglich.

Die Druckschrift DE 1 802 090 A offenbart eine Abdichtung aus elastischem Kunststoff für miteinander zu verbindende Muffelrohre aus Keramik.

Es ist daher Aufgabe der Erfindung, ein wasserführendes Haushaltsgerät bereitzustellen, dessen Montage einfacher ist.

Diese Aufgabe der Erfindung wird erfindungsgemäß dadurch gelöst, dass das Verbindungsteil einen Einführungsbereich und einen in Einführrichtung dahinter liegenden Dichtbereich aufweist. Der Dichtbereich setzt sich aus einem Stützring und einem Dichtring zusammen. Dabei bestehen der Dichtring und das Verbindungsteil aus demselben elastischen Material. Der Einführungsbereich umfasst eine Einführrundung, die so abgerundet ist, dass die Rundung tangential in den Dichtbereich übergeht. Dadurch wird der Stutzen auch bei schrägem Einführen oder Aufschieben in die koaxiale Position gezwungen. Dabei ist es prinzipiell unerheblich, ob der Stutzen in das Verbindungsteil eingeschoben oder es umschließend darüber geschoben wird. Die Erfindung verfolgt also das Prinzip, den Stutzen bei der Montage in die korrekte Lage zu lenken. Auch bei schrägem Ansetzen an das Verbindungsteil verkantet er nicht und gleitet vom Verbindungsteil nicht ab, sondern wird durch den Einführungsbereich bei fortschreitendem Eintauchen beziehungsweise Überstülpen in das Verbindungsteil in die gewünschte Position gezwungen.

Nach einer vorteilhaften Ausgestaltung der Erfindung weist der Dichtbereich einen innen liegenden Dichtring und einen außen liegenden Stützring auf. Der Stutzen wird also in das Verbindungsteil geschoben. Im Einführungsbereich verringert sich der Innendurchmesser in Einführrichtung. Durch den innen liegenden Dichtbereich ist dessen empfindlicheres Material besser geschützt und kann daher bei der Montage des Verbindungsteils nicht ohne weiteres beschädigt werden.

Nach einer weiteren vorteilhaften Ausgestaltung der Erfindung besteht das Verbindungsteil im Bereich der Einführrundung im Wesentlichen aus einem nichtelastischen Material. Es ist mit dem Stützring im Dichtbereich fest verbunden oder einstückig ausgebildet. Es wird belastet, wenn der Stutzen aus einer schrägen Richtung in eine mit dem Verbindungsteil koaxiale Position gezwungen wird. Beim Einschieben am Ende des Einführungsbereichs angelangt, befindet sich der Stutzen bereits in der gewünschten koaxialen Ausrichtung. Daraufhin wird der Stutzen weiter eingeschoben, so dass er den Dichtbereich erreicht. Erst dann wird das elastische Material im Dichtbereich belastet. Beim weiteren Einschieben des Stutzen ist es somit vor Verwalken weitgehend geschützt.

Nach einer weiteren vorteilhaften Ausgestaltung der Erfindung verhalten sich die Längen von Dichtbereich und Einführungsbereich ungefähr wie 3 zu 1. So ergibt sich eine ausreichende Einführlänge für die koaxiale Ausrichtung des Stutzens im Verhältnis zu der erforderlichen Dichtlänge.

Nach einer weiteren vorteilhaften Ausgestaltung der Erfindung ist die Länge des Verbindungsteils größer als sein Durchmesser. Dadurch ist das Verbindungsteil aus elastischem Material zuverlässig und schadlos knickbar. Es kann dadurch insbesondere in Richtung des Stutzens soweit geknickt werden, dass die Achsen von Verbindungsteil und Stutzen zusammenfallen. Das erleichtert ein Zusammenführen von Verbindungsteil und Stutzen auch bei beengten Platzverhältnissen erheblich.

Nach einer weiteren vorteilhaften Ausgestaltung der Erfindung verringert sich der Durchmesser des innen liegenden Dichtrings in Einführrichtung. Das heißt, dass der Dichtring einen steilen Trichter bildet. Das erleichtert ebenfalls das Montieren des Anschlussstutzens, da auch der Dichtring zentrierend wirkt. Je weiter der Anschlussstutzen eingeführt wird, umso höher ist die Anpresskraft zwischen Dichtring und Anschlussstutzen und umso besser auch die Abdichtung. Durch den veränderlichen Durchmesser des Dichtrings ist die Verbindung auch bei größeren Maßtoleranzen zwischen Verbindungsteil und Anschlussstutzen noch abdichtbar.

Nach einer weiteren vorteilhaften Ausgestaltung der Erfindung ist die Einführrundung an einer Einführnase ausgebildet und besteht ausschließlich aus dem nicht elastischen Material. Es besitzt einen geringeren Reibungskoeffizienten als das elastische Material. Dadurch vereinfacht sich das Ineinanderführen von Verbindungsteil und Stutzen.

Nach einer alternativen vorteilhaften Ausgestaltung der Erfindung erstreckt sich eine verhältnismäßig dünne Schicht des Dichtrings bis über die Einführungsrundung am in Einführungsrichtung vorderen Ende des Einführungsbereichs. Damit ist der Dichtring am Einführungsbereich verankert. Dadurch erhöht sich zwar einerseits der Reibungswiderstand am Einführungsbereich. Andererseits lässt sich ein abrupter Übergang zwischen einem harten Material am Einführungsbereich und dem weichen Material des Dichtbereichs mit einer potentiellen Anlaufkante und der Gefahr eines Verwalkens des elastischen Materials vermeiden. Es ergibt sich vielmehr ein stetiger Übergang vom Einführungsbereich zum Dichtbereich, so dass der Dichtring erst in einem mittleren Bereich durch Montagekräfte beaufschlagt wird, wo sie eine Lageänderung des Dichtrings kaum mehr verursachen können. Eine ungleichmäßige Belastung des Dichtrings und somit auch Verwalken wird vermieden.

Nach einer alternativen Ausgestaltung der Erfindung weist der Dichtbereich einen außen liegenden Dichtring und einen innen liegenden Stützring auf. Das oben beschriebene Prinzip kann also umgekehrt werden, wobei der Stutzen über das Ende des Verbindungsteils gestülpt wird. Alle vorher beschriebenen vorteilhaften Ausgestaltungen. können sinngemäß ausgebildet werden.

Das Prinzip der Erfindung wird im Folgenden anhand einer Zeichnung beispielshalber noch näher erläutert. In der Zeichnung zeigen:
- Figur 1: eine Seitenansicht eines Verbindungsteils,
- Figur 2: das Verbindungsteil und ein Stutzen in einer Ausgangsposition, und
- Figur 3: das Verbindungsteil und den Stutzen am Beginn des Einführvorgangs.

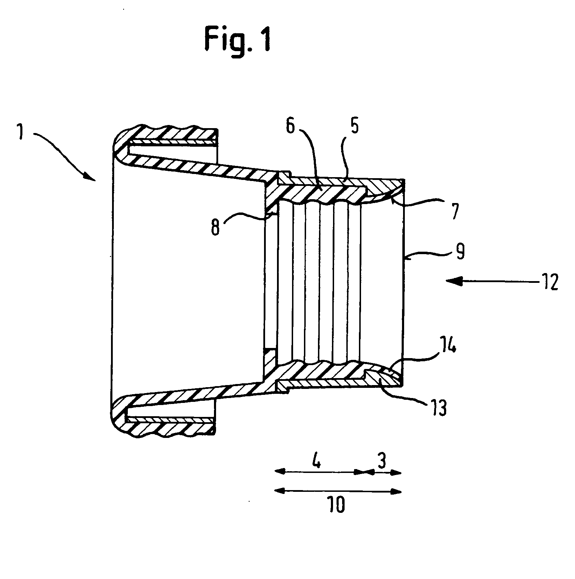

Figur 1 zeigt ein Verbindungsteil 1 zur druckdichten Verbindung von zwei Hydraulikkomponenten. Das können zum Beispiel ein Pumpenanschlussstutzen und eine Anschlussbuchse einer Ablaufwanne sein. Das Verbindungsteil 1 besteht im Wesentlichen aus einem elastischen Material. Das stutzenseitige Ende 10 des Verbindungsteils setzt sich aus einem Einführungsbereich 3 und einem Dichtbereich 4 zusammen. Deren Längenverhältnis beträgt etwa ein Viertel zu drei Vierteln. Das Ende 10 reicht bis zu einem Anschlagring 8, der das stutzenseitige Ende 10 vom übrigen Verbindungsteil 1 trennt.

Der Einführungsbereich 3, der sich am äußeren stutzenseitigen Rand 9 des Verbindungsteils 1 befindet, umfasst eine Einführrundung 7. Sie ist so abgerundet, dass sie tangential in einen Dichtring 6 übergeht. Der Innendurchmesser des Einführungsbereichs 3 nimmt also über seine gesamte Länge in Einführrichtung 12 ab. Der Einführungsbereich 3 besteht im Wesentlichen aus einer Einführnase 13 aus einem nichtelastischen Material, die auf der Innenseite des Verbindungsteils 1 mit einer dünnen Schicht 14 aus elastischem Material überzogen ist.

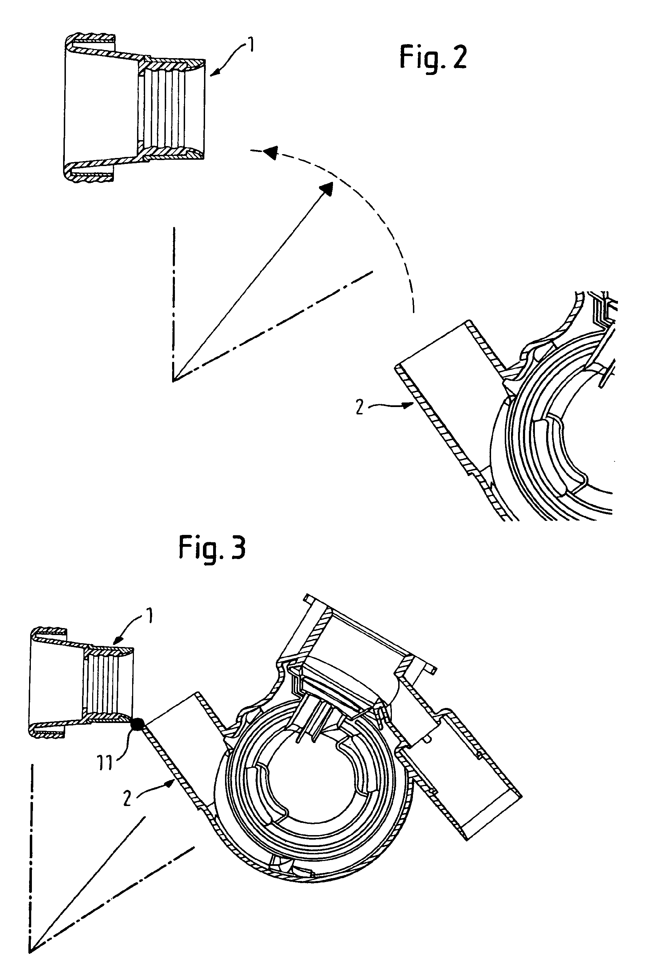

An den Einführungsbereich 3 grenzt in Einführrichtung 12 der Dichtbereich 4 unmittelbar an. Er setzt sich aus dem innen liegenden Dichtring 6 und einem außen liegenden Stützring 5 zusammen. Der Stützring 5 ist dünner als der Dichtring 6 und besteht aus nichtelastischem Material. Im Gegensatz dazu besteht der Dichtring 6 aus dem elastischen Material des Verbindungsteils 1 und wird mit diesem als ein Stück hergestellt. Der Stützring 5 ist mit dem Dichtring 6 und dadurch mit dem gesamten Verbindungsteil 1 unverschiebbar verbunden. Die dünne elastische Schicht 14 im Einführungsbereich 3 verankert den Dichtring 6 zusätzlich am Einführungsbereich 3. Die Innenseite des Dichtrings 6 ist in Einführrichtung 12 wellig ausgebildet, um ein Einführen eines Stutzens 2 (Fig. 2) zwar zu erleichtern und dennoch einen dichtende Anlage des Dichtrings 6 am Stutzen 2 zu gewährleisten.

Figur 2 zeigt das erfindungsgemäße Verbindungsteil 1 und einen schräg einführbaren Stutzen 2 einer Pumpe. Am Verbindungsteil 1 ist die komplette Verbindungsvorrichtung angeordnet. Der Stutzen 2 der Pumpe wird also ohne Zusatzmaßnahmen, wie zum Beispiel die Anordnung einer Dichtung oder eines Gewindes, montiert. Dabei kann der Stutzen 2 aus einer beliebigen Richtung an das Verbindungsteil herangeführt werden. Es ist nicht notwendig, dass der Stutzen 2 axial und mittig in das Verbindungsteil 1 eingeführt wird.

Figur 3 zeigt das Verbindungsteil 1 und den Stutzen 2 der Pumpe am Beginn des Einführvorgangs. Der Stutzen 2 wird über einen Kontaktpunkt 11 zwischen dem Stutzen 2 und dem Einführungsbereich 3 des Verbindungsteils 1 schräg in das Verbindungsteil 1 gedreht. Das kann notwendig sein, wenn die Platzverhältnisse eine axiale Montage nicht zulassen. Bei sehr beengten Platzverhältnissen ist es sogar möglich das Verbindungsteil 1 aufgrund seines elastischen Materials etwas in Richtung des einzuschiebenden Stutzens 2 zu verformen, um die beiden zu verbindenden Teile leichter zusammenzuführen. Der Stutzen 2 liegt jetzt zunächst einseitig an der Einführrundung 7 an. Aufgrund der Einführnase 13 aus nicht elastischem Material kann sich der stutzenseitige Rand 9 des Verbindungsteils 1 auch unter einer Druckbelastung bei der Montage nicht verformen. Beim weiteren Einführen des Stutzens 2 in das Verbindungsteil 1 wird er über die Einführrundung 7 des Einführungsbereichs 3 in eine koaxiale Position mit dem stutzenseitigen Endes 10 gezwungen. Dadurch liegt er auch mit seiner gegenüberliegenden Seite am dortigen Einführbereich 3 an. Jetzt wird der Stutzen 2 über seinen gesamten Umfang gleichzeitig in den Dichtbereich 4 des Verbindungsteils 1 geschoben. Dadurch ergibt sich auch eine gleichmäßige Belastung des Dichtrings 6, die ihn vor Verwalken schützt. Dagegen hilft außerdem die dünne Schicht 14, die den Dichtring 6 fest mit bzw. an der Einführnase 13 verankert.

**Bezugszeichenliste**

| | |
|---|---|
| 1 | Verbindungsteil |
| 2 | Stutzen |
| 3 | Einführungsbereich |
| 4 | Dichtbereich |
| 5 | Stützring |
| 6 | Dichtring |
| 7 | Einführrundung |
| 8 | Anschlagring |
| 9 | Stutzenseitiger Rand |
| 10 | Stutzenseitiges Ende |
| 11 | Kontaktpunkt |
| 12 | Einführrichtung |
| 13 | Einführnase |
| 14 | dünne Schicht |

## Patentansprüche

1. Wasserführendes Haushaltsgerät, insbesondere Haushalts-Geschirrspülmaschine oder Waschmaschine, wenigstens eine Anschlussbuchse aufweisend, die mittels eines Verbindungsteils (1) mit einem Stutzen (2) verbunden ist, bei der das Verbindungsteil (1) wenigstens abschnittsweise aus elastischem Material gebildet ist und ein Einführende (10), an dem ein Stützring (5) angeordnet ist, aufweist, **dadurch gekennzeichnet, dass** das Verbindungsteil (1) an dem Einführende (10) einen Einführungsbereich (3) mit einer Einführrundung (7) aufweist, die tangential in einen Dichtbereich (4) übergeht.

2. Wasserführendes Haushaltsgerät nach Anspruch 1, **dadurch gekennzeichnet, dass** der Dichtbereich (4) wenigstens durch einen Dichtring (6) und dem Stützring (5) gebildet wird.

3. Wasserführendes Haushaltsgerät nach Anspruch 1 oder 2, **dadurch gekennzeichnet, dass** die Einführrundung (7) im Wesentlichen aus einem nicht elastischen Material besteht.

4. Wasserführendes Haushaltsgerät nach einem der obigen Ansprüche, **dadurch gekennzeichnet, dass** sich die Längen von Einführungsbereich (3) und Dichtbereich (4) ungefähr wie drei zu eins verhalten.

5. Wasserführendes Haushaltsgerät nach einem der obigen Ansprüche, **dadurch gekennzeichnet, dass** die Länge des Verbindungsteils (1) größer ist als sein Durchmesser.

6. Wasserführendes Haushaltsgerät nach einem der Ansprüche 2 bis 5, **dadurch gekennzeichnet, dass** sich der Innendurchmesser des innen liegenden Dichtrings (6) in Einführrichtung (12) verringert.

7. Wasserführendes Haushaltsgerät nach einem der Ansprüche 2 bis 6, **dadurch gekennzeichnet, dass** der Dichtring (6) über die Einführrundung (7) des Einführungsbereichs (3) gezogen ist.

8. Wasserführendes Haushaltsgerät nach einem der Ansprüche 2 bis 7, **dadurch gekennzeichnet, dass** der Dichtring (6) in Einführrichtung (12) erst nach dem Einführungsbereich (3) beginnt.

9. Wasserführendes Haushaltsgerät nach einem der Ansprüche 2 bis 8, **dadurch gekennzeichnet, dass** der Dichtring (6) außen und der Stützring (5) innen liegt.

10. Wasserführendes Haushaltsgerät nach einem der Ansprüche 2 bis 8, **dadurch gekennzeichnet, dass** der Dichtring (6) innen und der Stützring (5) außen liegt.

## Claims

1. Water-conducting domestic appliance, in particular a domestic dishwasher or washing machine, which comprises at least one connector that is connected to a neck (2) by means of a connecting element (1), wherein at least sections of the connecting element (1) are formed from elastic material, the connecting element (1) having an insertion end (10) on which a supporting ring (5) is arranged, **characterised in that** the connecting element (1) has an insertion region (3) with an insertion rounding (7) on the insertion end (10), said insertion rounding (7) running tangentially into a sealing region (4).

2. Water-conducting domestic appliance according to claim 1, **characterised in that** the sealing region (6) is formed at least by a sealing ring (6) and the supporting ring (5).

3. Water-conducting domestic appliance according to claim 1 or 2, **characterised in that** the insertion rounding (7) consists essentially of a non-elastic material.

4. Water-conducting domestic appliance according to one of the preceding claims, **characterised in that** the lengths of the insertion region (3) and sealing region (4) have a ratio of approximately three to one.

5. Water-conducting domestic appliance according to one of the preceding claims, **characterised in that** the length of the connecting element (1) is greater than its diameter.

6. Water-conducting domestic appliance according to one of claims 2 to 5, **characterised in that** the internal diameter of the inner sealing ring (6) decreases in the insertion direction (12).

7. Water-conducting domestic appliance according to one of claims 2 to 6, **characterised in that** the sealing ring (6) is drawn over the insertion rounding (7) of the insertion region (3).

8. Water-conducting domestic appliance according to one of claims 2 to 7, **characterised in that** the sealing ring (6) only starts after the insertion region (3) in the insertion direction (12).

9. Water-conducting domestic appliance according to one of claims 2 to 8, **characterised in that** the sealing ring (6) is outside and the supporting ring (5) is inside.

10. Water-conducting domestic appliance according to one of claims 2 to 8, **characterised in that** the sealing ring (6) is inside and the supporting ring (5) is outside.

## Revendications

1. Appareil ménager à circulation d'eau, notamment lave-vaisselle à usage domestique ou lave-linge, présentant au moins une douille de raccordement qui est raccordée à un embout (2) au moyen d'une pièce de raccordement (1), dans laquelle la pièce de raccordement (1) est réalisée au moins en parties dans une matière élastique et présente une extrémité d'insertion (10), sur laquelle est disposée une bague d'appui (5), **caractérisé en ce que** la pièce de raccordement (1) présente sur l'extrémité d'insertion (10) une zone d'insertion (3) ayant un arrondi d'insertion (7) qui dépasse tangentiellement dans sa zone d'étanchéité (4).

2. Appareil ménager à circulation d'eau selon la revendication 1, **caractérisé en ce que** la zone d'étanchéité (4) est formée au moins par une bague d'étanchéité (6) et la bague d'appui (5).

3. Appareil ménager à circulation d'eau selon la revendication 1 ou 2, **caractérisé en ce que** l'arrondi d'insertion (7) est essentiellement constitué d'une matière non élastique.

4. Appareil ménager à circulation d'eau selon l'une quelconque des revendications précédentes, **caractérisé en ce que** les longueurs de la zone d'insertion (3) et de la zone d'étanchéité (4) se comportent approximativement comme dans un rapport trois à un.

5. Appareil ménager à circulation d'eau selon l'une quelconque des revendications précédentes, **caractérisé en ce que** la longueur de la pièce de raccordement (1) est plus grande que son diamètre.

6. Appareil ménager à circulation d'eau selon l'une quelconque des revendications 2 à 5, **caractérisé en ce que** le diamètre intérieur de la bague d'étanchéité (6) située à l'intérieur diminue dans le sens d'insertion (12).

7. Appareil ménager à circulation d'eau selon l'une quelconque des revendications 2 à 6, **caractérisé en ce que** la bague d'étanchéité (6) est tirée sur l'arrondi d'insertion (7) de la zone d'insertion (3).

8. Appareil ménager à circulation d'eau selon l'une quelconque des revendications 2 à 7, **caractérisé en ce que** la bague d'étanchéité (6), dans le sens d'insertion (12), commence seulement après la zone d'insertion (3).

9. Appareil ménager à circulation d'eau selon l'une quelconque des revendications 2 à 8, **caractérisé en ce que** la bague d'étanchéité (6) est située à l'extérieur et la bague d'appui (5) à l'intérieur.

10. Appareil ménager à circulation d'eau selon l'une quelconque des revendications 2 à 8, **caractérisé en ce que** la bague d'étanchéité (6) est située à l'intérieur et la bague d'appui (5) à l'extérieur.
